# DEMANDE DE BREVET EUROPEEN

(11) **EP 3 088 110 A1**
(43) Date de publication de la demande: **02.11.2016**
(21) Numéro de dépôt: 14447011.9
(22) Date de dépôt: 28.04.2015
(51) Int. Cl.: B23B 35/00, B23B 47/28

(54) **PROCÉDÉ ET DISPOSITIF POUR GUIDER LE PERCAGE D'UNE PIECE PROFILÉE**

(71) Demandeur: Hubert, René, 6140 Faontaine-L'Evêque (BE)
(72) Inventeur: Hubert, René, 6140 Faontaine-L'Evêque (BE)

(57) **Abrégé**

L'invention se rapporte à un procédé, pour guider le perçage d'une pièce profilée reposant sur un plan incliné par rapport à un axe directionnel de perçage, comportant les étapes suivantes :
a) détermination de l'angle d'inclinaison formé par le plan supportant ladite pièce profilée, et un axe de référence,
b) déplacement de ce plan, qui supporte cette pièce profilée, dans un plan servant de base à celle-ci sur un support monté à rotation autour d'un axe et muni d'un indicateur d'angles capable de se déplacer en regard d'une échelle graduée en degrés d'angle à partir de l'axe de référence,
c) déplacement de cet indicateur le long de ladite échelle jusqu'à la valeur déterminée de l'angle d'inclinaison,
d) perçage de la pièce profilée.

## Description

La présente invention se rapporte d'une manière générale à un procédé pour guider le perçage d'une pièce profilée ainsi qu'à un dispositif pour sa mise en oeuvre.

Plus précisément, l'invention concerne un procédé pour guider le perçage d'une pièce profilée reposant sur un plan incliné par rapport à un axe directionnel de perçage.

A ce jour, le perçage, selon un angle donné, d'une pièce profilée du genre cylindre plein ou tube cylindrique s'effectue au moyen de dispositifs stationnaires. Hormis leur coût prohibitif, ces dispositifs présentent plusieurs inconvénients non négligeables. Tout d'abord, leur volume et encombrement très important empêchent de les amener sur chantiers, ce qui peut engendrer des déplacements fastidieux entre le chantier et le dispositif et, en conséquence, provoquer des pertes de temps parfois considérables. D'autre part, certains de ces dispositifs exigent, dans le cas par exemple de tubes cylindriques, un perçage suivant deux étapes différentes à savoir le perçage d'une première portion de paroi du tube, selon une première manipulation, ensuite le perçage d'une seconde portion de paroi opposée à la première, selon une seconde manipulation, en partant de l'extérieur de ce tube. De même, certains dispositifs de perçage nécessitent deux forets différents opposés l'un à l'autre pour le perçage en une étape c'est-à-dire l'utilisation d'un premier foret pour le perçage d'une première portion de paroi du tube et d'un second foret pour le perçage d'une seconde portion de paroi opposée à la première.

La nécessité de multiplier le nombre de manipulations ou le nombre de forets pour réaliser un perçage de la pièce profilée de part en part engendre de surcroît des inconvénients supplémentaires qui grèvent les coûts de main d'oeuvre.

La présente invention a pour but de proposer un procédé, du type indiqué précédemment, capable de pallier ces inconvénients de l'état de la technique.

Pour atteindre ce but, le procédé selon l'invention, du type indiqué précédemment, est caractérisé en ce qu'il comporte les étapes suivantes :
a) détermination de l'angle d'inclinaison formé par le plan sur lequel repose ladite pièce profilée et un axe de référence qui est soit l'axe directionnel de perçage soit un axe perpendiculaire à celui-ci,
b) déplacement de ce plan, supportant cette pièce profilée, dans un plan destiné à servir de base à celle-ci sur un support monté à rotation autour d'un axe et muni d'un indicateur d'angles capable de se déplacer en regard d'une échelle graduée en degrés d'angle à partir de l'axe de référence,
c) déplacement de cet indicateur d'angles le long de cette échelle graduée jusqu'à atteindre la valeur déterminée de l'angle d'inclinaison, ce qui entraine la rotation, autour dudit axe, de la pièce profilée qui adopte cet angle d'inclinaison et immobilisation de cette pièce sur son support,
d) perçage de la pièce profilée selon l'axe directionnel de perçage.

Par « angle d'inclinaison », on entend, par conséquent, un angle d'une valeur maximale de 90° formé :
- par un plan support fictif de la pièce profilée extérieurement à un support matériel, ou
- par le plan de base de la pièce profilée sur un support matériel,
et un axe de référence perçant ce plan.

Selon un mode de réalisation particulier du procédé selon l'invention, l'angle d'inclinaison est déterminé par rapport à un axe perpendiculaire à l'axe directionnel de perçage.

Habituellement, la pièce profilée, qui peut être creuse ou pleine, est de forme parallélépipédique ou cylindrique en sorte que le plan de base de cette pièce profilée coïncide avec, respectivement, la totalité d'une face du parallélépipède ou avec une génératrice du cylindre. Toutefois, d'autres volumes pourraient être envisagés, par exemple des volumes ayant un ou plusieurs points d'appui séparés situés dans le plan de base de la pièce profilée. D'autre part, cette pièce profilée peut être constituée d'un seul matériau ou d'un mélange de divers matériaux de sorte que celle-ci peut être fabriquée par exemple en métal, laiton, acier, bois, plastique ou autres.

Un autre objet de l'invention se rapporte à un dispositif pour la mise en oeuvre du procédé décrit précédemment, ce dispositif comprenant, solidaire d'un bâti qui comprend deux parois parallèles, un support pour une pièce profilée, lequel est monté à rotation sur lui-même et comprend :
a) au moins deux parties sous forme de deux mâchoires solidaires entre lesquelles vient se loger la pièce profilée, l'une de ces mâchoires étant montée en articulation autour d'un axe unique solidaire des deux parois parallèles du bâti ou autour de deux portions d'axe et chacune de ces portions d'axe étant solidaire d'une paroi différente choisie parmi les deux parois parallèles du bâti et
b) un indicateur d'angles (12) en relation avec une échelle graduée (15) en degrés d'angle
c) des moyens de solidarisation des mâchoires entre elles ainsi que des moyens pour l'immobilisation du support entre les deux parois parallèles du bâti.

Généralement, le support de la pièce profilée est fixé à un bâti comprenant deux parois parallèles elles-mêmes montées au droit d'une plaque de base servant de socle. De préférence, ce support est configuré en au moins deux parties sous forme de deux mâchoires entre lesquelles vient se loger la pièce profilée. Ces mâchoires sont solidarisées entre elles, par le biais de moyens appropriés, de telle manière qu'elles peuvent se juxtaposer, par l'intermédiaire de l'une de leurs faces, s'écarter l'une de l'autre ou se rapprocher. Généralement, les moyens de solidarisation de ces mâchoires entre elles sont choisis, par exemple, parmi des vis et des systèmes boulon/écrou, goujon/écrou et tige filetée/écrou.

En outre, ces mâchoires comportent chacune un premier évidement qui s'étend longitudinalement à partir de leurs faces capables de se juxtaposer. Lorsque ces faces sont juxtaposées, les évidements rapprochés créent un orifice unique pratiqué dans l'ensemble constitué par les deux mâchoires, orifice apte à accueillir la pièce profilée. Cet orifice unique peut être, par exemple, de forme parallélépipédique ou cylindrique de manière à loger une pièce profilée de configuration respectivement parallélépipédique ou cylindrique.

Dans un tel mode de réalisation du dispositif selon l'invention, le plan de base est celui qui coïncide, lorsque l'orifice de logement est parallélépipédique, avec la face de cet orifice qui est la plus proche du socle. Toutefois, lorsque cet orifice est cylindrique, le plan de base est celui dans lequel se situe la génératrice la plus proche du socle.

Les mâchoires en question sont également munies de moyens capables d'assurer l'immobilisation, entre elles, de la pièce profilée, habituellement dans la position angulaire déterminée au préalable en vue du perçage. Généralement, ces moyens d'immobilisation de la pièce profilée sont choisis, par exemple, parmi des vis et des systèmes boulon/écrou, goujon/écrou et tige filetée/écrou.

En outre, ces mâchoires présentent un second évidement longitudinal qui les traverse de part en part, ce second évidement étant destiné à livrer passage à un foret quelque soit l'angle d'inclinaison de la pièce profilée.

D'autre part, l'une des mâchoires en question est montée en articulation, de préférence, autour de deux portions d'axe, chacune de ces portions d'axe étant solidaire d'une paroi différente choisie parmi les deux parois parallèles du bâti.

A cette mâchoire articulée est solidarisé un indicateur d'angles sous forme, par exemple, d'un boulon, d'un goujon ou d'une tige filetée. Cet indicateur d'angles est apte à coulisser dans une fente pratiquée dans l'une des deux parois parallèles du bâti et coopère avec une échelle, graduée en degrés d'angle, qui est reproduite sur cette même paroi, habituellement sur sa face extérieure.

Le dispositif selon l'invention comporte également des moyens d'immobilisation du support entre les deux parois parallèles du bâti. Ces moyens comprennent, par exemple, au moins un écrou monté sur l'indicateur d'angles solidaire de ce support, cet indicateur étant conformé en un boulon, goujon ou tige filetée. De même, ces moyens comprennent éventuellement au moins un écrou monté sur l'axe unique solidaire des deux parois parallèles du bâti ou sur chacune des deux portions d'axe qui sont solidaires chacune d'une paroi différente choisie parmi les deux parois parallèles du bâti.

En outre, ce dispositif est également muni de moyens d'immobilisation de la pièce profilée dans la position angulaire déterminée au préalable en vue du perçage. Généralement, ces moyens d'immobilisation correspondent à un écrou fixé sur l'indicateur d'angles solidaire du support.

Accessoirement, l'orifice unique créé par les deux mâchoires juxtaposées peut loger un manchon amovible. Celui-ci, fabriqué en un matériau non agressif pour la pièce profilée, par exemple une matière polymère telle que le nylon, est capable de réduire la lumière de cet orifice. Ce manchon peut être immobilisé à l'intérieur de l'orifice en question par le biais de moyens appropriés solidaires du support choisis, par exemple, parmi des vis et des systèmes boulon/écrou, goujon/écrou et tige filetée/écrou. Ce manchon comporte, de préférence, au moins un orifice destiné à livrer passage à un foret.

D'autre part, ce manchon présente un évidement longitudinal destiné à livrer passage à un foret quelque soit l'angle d'inclinaison de la pièce profilée.

Le dispositif selon l'invention peut également comporter une paroi transversale de raccord des deux parois parallèles du bâti, paroi dans laquelle est pratiqué un orifice pour le passage d'un foret destiné au perçage. Toutefois, la lumière de cet orifice peut être réduite au moyen d'une douille dont le diamètre sera adapté au diamètre du foret.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemple non limitatif illustrant un mode de réalisation de l'invention et dans lesquels :
- la figure 1 est une représentation d'une vue en élévation d'un dispositif selon l'invention destiné à percer une pièce façonnée cylindrique,
- la figure 2 est une représentation d'une vue latérale du dispositif à la figure 1.
- la figure 3 est une représentation d'une vue du dessus du dispositif à la figure 1.

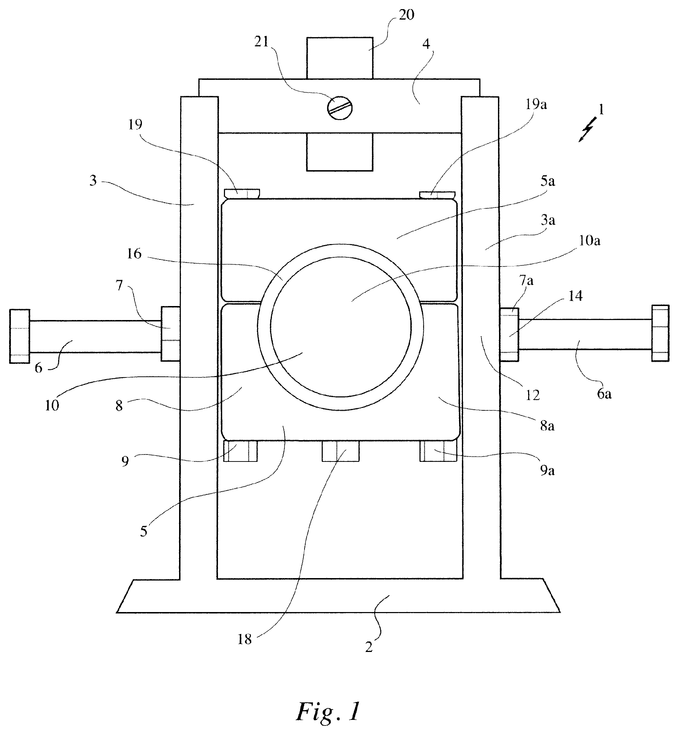

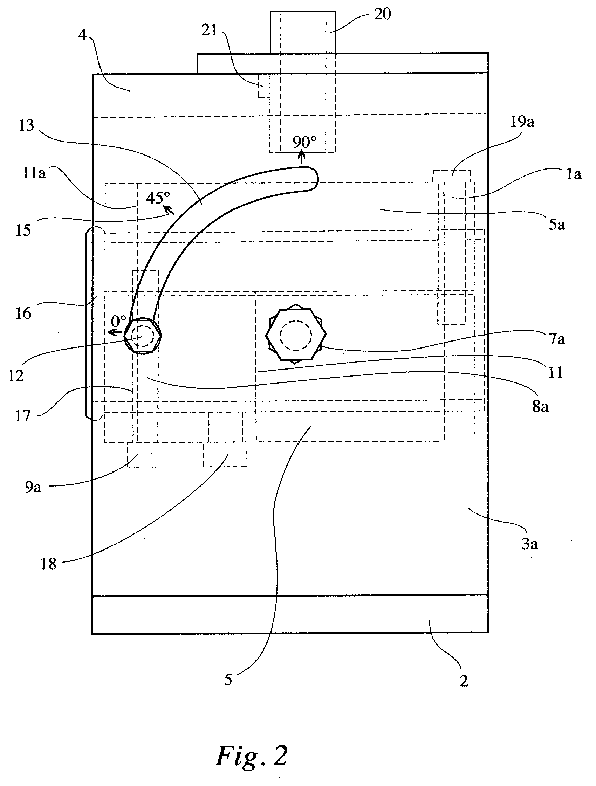

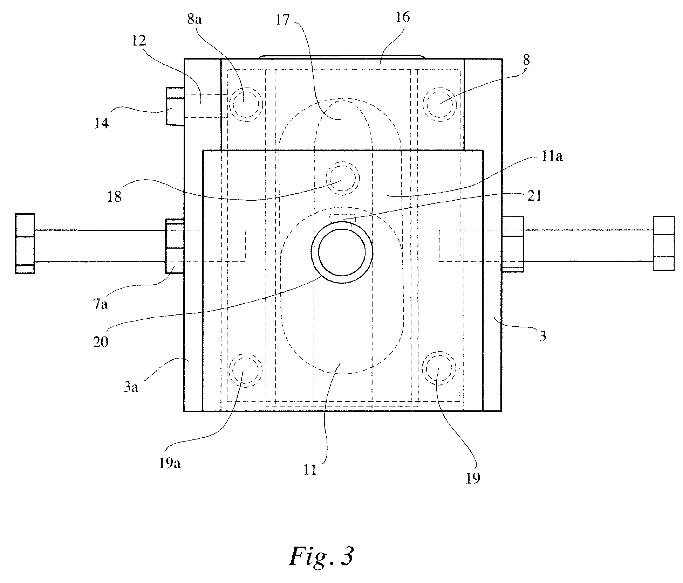

Tel que représenté aux figures 1 à 3, le dispositif 1 comprend un bâti formé d'un socle 2, de deux parois 3, 3a parallèles et perpendiculaires à ce socle ainsi que d'une paroi transversale 4 supérieure. La figure 1 montre également deux mâchoires: la mâchoire 5 inférieure et articulée autour des goujons 6 et 6a munis des écrous respectivement 7 et 7a et la mâchoire 5a supérieure, elle-même solidaire de la mâchoire 5 par l'intermédiaire des boulons 8 et 8a munis des écrous respectivement 9 et 9a. D'autre part, les mâchoires 5, 5a présentent chacune un premier évidement longitudinal de profil partiellement circulaire respectivement 10 et 10a ainsi qu'un second évidement longitudinal soit respectivement 11 et 11a destiné au passage d'un foret. La mâchoire 5 est pourvue, en outre, d'un indicateur d'angles 12, sous forme d'un goujon, cet indicateur d'angles faisant saillie de cette mâchoire au travers d'une fente 13 visible à la figure 2. Ce goujon 12 est également muni d'un écrou 14 capable d'en assurer l'immobilisation dans la fente 13. La paroi 3a comporte en outre, sur sa face extérieure, une échelle 15 graduée en degrés d'angle à partir d'un axe de référence horizontal lequel correspond à la valeur angulaire 0°. Cet axe horizontal est perpendiculaire à la direction verticale de perçage qui représente, par conséquent, la valeur angulaire 90°. Cette échelle graduée est en relation directe avec l'indicateur d'angles. De plus, les figures 1 à 3 montrent également la présence d'un manchon réducteur 16 qui révèle un orifice 17 pratiqué de part en part destiné au passage d'un foret. Ce manchon est introduit à l'intérieur d'un orifice de logement provenant de la réunion des évidements 10, 10a, orifice créé par les mâchoires 5, 5a juxtaposées. Ces figures révèlent également la présence d'un boulon 18 destiné à immobiliser ce manchon. En outre, des boulons 19, 19a, aptes à assurer l'immobilisation d'une pièce profilée à l'intérieur du manchon 16, sont également visibles de même qu'une douille 20 introduite dans un orifice pratiqué au travers de la paroi transversale 4 pour le passage et le guidage d'un foret. Cette douille est immobilisée dans cet orifice par l'intermédiaire d'une vis 21.

A la lumière de ce qui précède, on comprend que lors d'une mise en oeuvre du dispositif de l'invention ainsi décrit, on détermine d'abord la valeur angulaire de l'inclinaison que doit adopter l'axe de la pièce profilée cylindrique par rapport à la direction perpendiculaire à la direction de perçage qui représente l'axe de référence vertical. Si nécessaire, on modifie la distance entre les mâchoires 5, 5a en agissant sur les écrous 9, 9a de manière à introduire le manchon réducteur 16 à l'intérieur de l'orifice créé par les évidements 10, 10a et on l'y immobilise en agissant sur le boulon 18. On introduit ensuite la pièce profilée à l'intérieur du manchon réducteur. On programme, sur l'échelle graduée 15, la valeur angulaire prédéterminée puis on déplace l'indicateur d'angles 12 dans la fente 13 jusqu'à l'amener en correspondance avec l'indication angulaire sur l'échelle graduée. On immobilise alors la mâchoire 5 en agissant à la fois sur l'écrou 14 du goujon 12 et sur les écrous 7 et 7a des goujons d'articulation respectivement 6 et 6a, puis on immobilise la pièce profilée à l'intérieur du manchon par l'intermédiaire des boulons 19, 19a. Dans un orifice pratiqué au travers de la paroi transversale 4, on introduit alors la douille 20, on l'y immobilise au moyen de la vis 21 et on amène alors un foret à passer au travers de cette paroi 4 supérieure par l'intermédiaire de la douille 20 en vue du perçage, selon la direction verticale, de la pièce à l'endroit souhaité.

Le procédé selon l'invention et le dispositif pour sa mise en oeuvre présentent des avantages incontestables par rapport à l'état de la technique évoqué précédemment. En effet, ce procédé ne nécessite pas la réalisation d'étapes ou de manipulations délicates, compliquées ou fastidieuses. D'autre part, ce procédé peut être réalisé au départ d'un dispositif de faibles dimensions, aisément transportable et facilement utilisable directement sur un chantier. D'autre part, ce dispositif est de construction simple, au départ de matériaux communs et d'un prix de revient extrêmement intéressant par rapport aux coûts des dispositifs antérieurs pour guider le perçage de pièces profilées.

## Revendications

1. Procédé pour guider le perçage d'une pièce profilée reposant sur un plan incliné par rapport à un axe directionnel de perçage, **caractérisé en ce qu'**il comporte les étapes suivantes :
a) détermination de l'angle d'inclinaison formé par le plan sur lequel repose ladite pièce profilée et un axe de référence qui est soit l'axe directionnel de perçage soit un axe perpendiculaire à celui-ci,
b) déplacement de ce plan, supportant cette pièce profilée, dans un plan destiné à servir de base à celle-ci sur un support monté à rotation autour d'un axe et muni d'un indicateur d'angles capable de se déplacer en regard d'une échelle graduée en degrés d'angle à partir de l'axe de référence,
c) déplacement de cet indicateur d'angles le long de ladite échelle graduée jusqu'à atteindre la valeur déterminée de l'angle d'inclinaison, ce qui entraine le déplacement, autour dudit axe de rotation, de la pièce profilée qui adopte cet angle d'inclinaison et immobilisation de cette pièce sur son support,
d) perçage de la pièce profilée selon l'axe directionnel de perçage.

2. Procédé selon la revendication 1, **caractérisé en ce que** l'angle d'inclinaison est déterminé par rapport à un axe perpendiculaire à l'axe directionnel de perçage.

3. Dispositif pour la mise en oeuvre du procédé selon la revendication 1 ou 2, **caractérisé en ce qu'**il comprend, solidaire d'un bâti comprenant deux parois parallèles (3,3a), un support, pour une pièce profilée, lequel est monté à rotation sur lui-même et comprend :
a) au moins deux parties sous forme de deux mâchoires (5,5a) solidaires entre lesquelles vient se loger la pièce profilée, l'une de ces mâchoires étant montée en articulation autour d'un axe unique solidaire des deux parois parallèles du bâti ou autour de deux portions d'axe (6,6a) et chacune de ces portions d'axe étant solidaire d'une paroi différente choisie parmi les deux parois parallèles du bâti,
b) un indicateur d'angles (12) en relation avec une échelle graduée (15) en degrés d'angle,
c) des moyens de solidarisation des mâchoires entre elles ainsi que des moyens pour l'immobilisation du support entre les deux parois parallèles du bâti.

4. Dispositif selon la revendication 3, **caractérisé en ce que** les deux mâchoires comprennent chacune un premier évidement (10,10a) qui, lorsque ces mâchoires sont juxtaposées, créent un orifice unique apte à accueillir ladite pièce profilée ainsi qu'un second évidement (11,11a) qui les traverse de part en part destiné à livrer passage à un foret quelque soit l'angle d'inclinaison de la pièce profilée.

5. Dispositif selon la revendication 3 ou 4, **caractérisé en ce que** l'indicateur d'angles est solidaire de la mâchoire montée en articulation.

6. Dispositif selon l'une des revendications 3 à 5, **caractérisé en ce que** l'indicateur d'angles est apte à coulisser dans une fente (13) pratiquée dans l'une des deux parois parallèles du bâti et coopère avec l'échelle (15), graduée en degrés d'angle, reproduite sur cette paroi.

7. Dispositif selon l'une des revendications 3 à 6, **caractérisé en ce que** l'orifice unique créé par les deux mâchoires juxtaposées loge un manchon (16) amovible capable de réduire la lumière de cet orifice.

8. Dispositif selon l'une des revendications 3 à 7, **caractérisé en ce que** les moyens d'immobilisation du support comprennent :
a) au moins un écrou (14) monté sur l'indicateur d'angles (12) solidaire de ce support, cet indicateur étant conformé en un boulon, goujon ou tige filetée, et
b) éventuellement au moins un écrou monté sur l'axe unique solidaire des deux parois parallèles du bâti ou au moins un écrou (7,7a) monté sur chacune des deux portions d'axe, chacune de ces portions d'axe étant solidaire d'une paroi différente choisie parmi les deux parois parallèles du bâti.

9. Dispositif selon l'une des revendications 3 à 8, **caractérisé en ce que** les mâchoires comportent des moyens pour assurer l'immobilisation, entre elles, de la pièce profilée ainsi que des moyens d'immobilisation du manchon.

10. Dispositif selon l'une des revendications 3 à 9, **caractérisé en ce que** les moyens de solidarisation des mâchoires entre elles, les moyens d'immobilisation de la pièce profilée et les moyens d'immobilisation du manchon sont choisis parmi des vis (21) et des systèmes boulon (19,19a)/écrou, goujon (6,6a)/écrou (7,7a) et tige filetée/écrou.

11. Dispositif selon l'une des revendications 3 à 10, **caractérisé en ce qu'**il comporte une paroi transversale (4) de raccord des deux parois parallèles du bâti dans laquelle est pratiqué un orifice pour le passage d'un foret de perçage.

12. Dispositif selon la revendication 11, **caractérisé en ce qu'**il comporte une douille (20) amovible capable de réduire la lumière de l'orifice de passage du foret.
